(19) Europäisches Patentamt
European Patent Office
Office européen des brevets

(11) **EP 2 320 649 A1**

(12) **EUROPEAN PATENT APPLICATION**
published in accordance with Art. 153(4) EPC

(43) Date of publication:
**11.05.2011 Bulletin 2011/19**

(51) Int Cl.:
**H04N 7/01** (2006.01)

(21) Application number: **09797963.7**

(22) Date of filing: **16.07.2009**

(86) International application number:
**PCT/JP2009/062859**

(87) International publication number:
**WO 2010/008039 (21.01.2010 Gazette 2010/03)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **18.07.2008 JP 2008187739**

(71) Applicant: **Victor Company Of Japan, Limited
Kanagawa-ku
Yokohama-shi
Kanagawa 221-8528 (JP)**

(72) Inventor: **AIBA, Hideki
Kanagawa (JP)**

(74) Representative: **Schmidbauer, Andreas Konrad
Wagner & Geyer
Gewürzmühlstrasse 5
80538 München (DE)**

(54) **VIDEO SIGNAL PROCESSOR AND VIDEO SIGNAL PROCESSING METHOD**

(57)   An image memory 10 delays an input video signal by one frame period and a motion vector detection circuit 20 detects a motion vector between frames of video signals. A pull-down detection circuit 22 determines whether or not a video signal is pull-down converted and a motion vector conversion circuit 21 generates control signals to control delay amounts in delay circuits 30 to 32 based on the motion vector and the determination result of pull-down conversion. The delay circuit compensates for the motion of a video signal based on the control signal to generate a motion-compensated video signal and time axis emphasis circuits 40, 41 emphasize the motion-compensated video signal in a time axis direction by another video signal to generate an emphasized video signal. A time series conversion memory 50 converts the frame rate of the emphasized video signal into a higher frame rate and outputs the emphasized video signal.

FIG. 1

EP 2 320 649 A1

**Description**

**Technical Field**

The present invention relates to a video signal processing device and a video signal processing method that convert the frame frequency of a video signal that is input into a frame frequency higher than that of the input video signal and then display the video on a display part, such as a liquid crystal panel.

**Background Art**

A liquid crystal display device that uses a liquid crystal panel has such a problem that image persistence occurs when a motion picture is displayed. As one of methods of reducing this problem, Patent Document 1 discloses an image display device which interpolates interpolation frames between frames of an input video signal, converts the frame rate of the input video signal into a higher frame rate, and displays the video on a liquid crystal panel. According to the image display device described in Patent Document 1, it is possible to convert a video signal of a frame frequency of 60 Hz into a video signal of a frame frequency of, for example, 120 Hz.

On the other hand, a movie film represents a motion picture by switching still images of 24 frames per second or 30 frames per second. When the video signal of such a movie film is converted into a video signal of a vertical frequency of 60 Hz, which is the standard television signal, 2-3 pull-down conversion or 2-2 pull-down conversion is performed. For example, when a video signal that is 2-3 pull-down converted is displayed, a pattern in which an identical frame continues twice and then the next frame continues three times is repeated. Hence, there occurs a problem that smoothness of motion of images is lost, which is called a motion judder.

**Prior Art Document**

**Patent Document**

Patent Document 1: Japanese Patent Laid-Open No. 2006-337448

**Summary of the Invention**

**Technical Problem**

When a video signal of a movie film is input to the image display device described in Patent Document 1, if the pattern of frames to be input successively is the same, the interpolation frames to be interpolated between frames have the same pattern as that of the frames before and after the interpolation frame. Hence, with the image display device described in Patent Document 1, it is not possible to improve the motion judder for the video signal of a movie film, and an image gives an uncomfortable feeling to a viewer as a result.

In recent years, video signal processing devices capable of converting a frame rate into a higher one become the mainstream. Therefore, a video signal processing device is demanded which is capable of converting a frame rate into the same one as before or a higher one as well as improving the motion judder even for the video signal of a movie film. Further, a video signal processing device is desired which reduces a processing rate and reduces a frame memory as well as being capable of converting a frame rate into a higher one.

**Solution to Problem**

The present invention has been made in view of such circumstances and an object thereof is to provide a video signal processing device which is capable of converting a frame rate into one equal to or higher than that of an input video signal as well as improving the motion judder when the input video signal is a video signal of a movie film and which reduces a processing rate and reduces a frame memory as well as being capable of converting a frame rate into a higher one as before when the input video signal is the standard television signal.

In order to solve the conventional technical problems described above, the present invention is a video signal processing device comprising a frame memory delaying each frame of a first video signal that is input by one frame period to output a second video signal, a motion vector detecting unit configured to detect a motion vector between the frames of the first video signal and the second video signal, a pull-down determining unit configured to determine whether or not the first video signal is a pull-down converted video signal, a sequence generating unit configured to generate pull-down sequence information based on the determination result of the pull-down determining unit and the motion vector, an image shifting unit configured to compensate for the motion of at least one of the first and second video signals based on the pull-down sequence information and the motion vector to generate a plurality of motion-compensated video signals, a time axis emphasizing unit configured to emphasize N (N is a natural number not less than 2) motion-compensated video signals among the plurality of motion-compensated video signals, respectively, in a time axis direction based on at least one or more of the motion-compensated video signals including the neighboring motion-compensated video signals in the order of time series to output N emphasized video signals, and a time series conversion memory converting the frame frequencies of the N emphasized video signals into those N times the original ones and outputting them in the order of time series.

Further, the present invention is a video signal processing device comprising a frame memory delaying each frame of a first video signal that is input by one frame period to output a second video signal, a motion vector detecting unit configured to detect a motion vector between the frames of the first video signal and the second video signal, a pull-down determining unit configured to determine whether or not the first video signal is a pull-down converted video signal, a sequence generating unit configured to generate pull-down sequence information based on the determination result of the pull-down determining unit, an image shifting unit configured to compensate for the motion of at least one of the first and second video signals based on the pull-down sequence information when the pull-down determining unit determines that the first video signal is a pull-down converted video signal and the motion vector to generate a plurality of motion-compensated video signals, a time axis emphasizing unit configured to emphasize M (M is a natural number) motion-compensated video signals among the plurality of motion-compensated video signals, respectively, in the time axis direction based on at least one or more of the motion-compensated video signals including the neighboring motion-compensated video signals in the order of time series to output M emphasized video signals when the pull-down determining unit determines that the first video signal is a pull-down converted video signal, and a time series conversion memory converting the frame frequencies of the motion-compensated video signal and the emphasized video signal into those N times the original ones and outputting them in the order of time series as well as repeatedly outputting the combination of the motion-compensated video signal and the emphasized video signal based on the motion-compensated video signal N/M times (N is a natural number multiple of M) per output for the M motion-compensated video signals, respectively, when the pull-down determining unit determines that the first video signal is a pull-down converted video signal.

Further, the present invention is a video signal processing device comprising a frame memory delaying each frame of a first video signal that is input by one frame period to output a second video signal, a pull-down determining unit configured to determine whether or not the first video signal is a pull-down converted video signal and to determine the kind of pull-down conversion when the first video signal is a pull-down converted video signal, a sequence generating unit configured to generate 5K-5K pull-down sequence information (K is a natural number) when the pull-down determining unit determines that the first video signal is a 2-3 pull-down converted video signal, a selecting unit configured to select the first video signal or the second video signal and to output 5K video signals having the same time series per output for each one frame cycle as selected video signals when the pull-down determining unit determines that the first video signal is a 2-3 pull-down converted video signal, a time axis emphasizing unit configured to emphasize the selected video signal after the time series switches by one frame cycle in the time axis direction based on the selected video signal in a previous frame cycle, and a time series conversion memory converting the frame frequency of the first video signal into one 2K times the original one and outputting 5K selected video signals per output for each one frame cycle in the order of time series.

Further, the present invention is a video signal processing device comprising a frame memory delaying each frame of a first video signal that is input by one frame period to output a second video signal, a pull-down determining unit configured to determine whether or not the first video signal is a pull-down converted video signal and to determine the kind of pull-down conversion when the first video signal is a pull-down converted video signal, a sequence generating unit configured to generate L-(L+1) pull-down sequence information (L is 2N+(N-1)/2 and N is an odd number not less than 3) when the pull-down determining unit determines that the first video signal is a 2-3 pull-down converted video signal, a selecting unit configured to select the first video signal or the second video signal and to repeatedly output L and then (L+1) video signals having the same time series per output for each one frame cycle as selected video signals when the pull-down determining unit determines that the first video signal is a 2-3 pull-down converted video signal, a time axis emphasizing unit configured to emphasize the selected video signal after the time series switches by one frame cycle in the time axis direction based on the selected video signal in the previous frame cycle, and a time series conversion memory converting the frame frequency of the first video signal into one N times the original one and repeatedly outputting L then (L+1) selected video signals per output for each one frame cycle in the order of time series.

Further, the present invention is a video signal processing method comprising the steps of delaying each frame of a first video signal that is input by one frame period to output a second video signal, detecting a motion vector between the frames of the first video signal and the second video signal, determining whether or not the first video signal is a pull-down converted video signal, generating pull-down sequence information based on the results of determining whether or not the first video signal is a pull-down converted video signal and of determining the kind of pull-down conversion, compensating for the motion of at least one of the first and second video signals based on the pull-down sequence information and the motion vector to generate a plurality of motion-compensated video signals, emphasizing N (N is a natural number not less than 2) motion-compensated video signals among the plurality of motion-compensated video signals, respectively, in the time axis direction based on at least one or more of the motion-compensated video signals including the neighboring motion-compensated video signals in the order of time series to output N emphasized video signals, and converting the frame frequencies of the N emphasized video signals into those N times the original ones and outputting them in the order of time series.

Further, the present invention is a video signal processing method comprising the steps of delaying each frame of a first video signal that is input by one frame period to output a second video signal, detecting a motion vector between the frames of the first video signal and the second video signal, determining whether or not the first video signal is a pull-down converted video signal, generating pull-down sequence information based on the determination result in the step of determining whether or not the first video signal is a pull-down converted video signal, compensating for the motion of at least one of the first and second video signals based on the pull-down sequence information when the first video signal is determined to be a pull-down converted video signal and the motion vector to generate a plurality of motion-compensated video signals, emphasizing M (M is a natural number) video signals among the plurality of motion-compensated video signals, respectively, in the time axis direction based on at least one or more of the motion-compensated video signals including the neighboring motion-compensated video signals in the order of time series to output M emphasized video signals when the step of determining whether or not the first video signal is a pull-down converted video signal determines that the first video signal is a pull-down converted video signal, and converting the frame frequencies of the motion-compensated video signal and the emphasized video signal into those N times the original ones and outputting them in the order of time series as well as repeatedly outputting the combination of the motion-compensated video signal and the emphasized video signal based on the motion-compensated video signal N/M times (N is a natural number multiple of M) per output for the M motion-compensated video signals, respectively, when the step of determining whether or not the first video signal is a pull-down converted video signal determines that the first video signal is a pull-down converted video signal.

Further, the present invention is a video signal processing method comprising the steps of delaying each frame of a first video signal that is input by one frame period to output a second video signal, determining whether or not the first video signal is a pull-down converted video signal and determining the kind of pull-down conversion when the first video signal is a pull-down converted video signal, generating 5K-5K pull-down sequence information (K is a natural number) based on the motion vector when the step of determining whether or not the first video signal is a pull-down converted video signal and determining the kind of pull-down conversion when the first video signal is a pull-down converted video signal determines that the first video signal is a 2-3 pull-down converted video signal, selecting the first video signal or the second video signal and outputting 5K video signals having the same time series per output for each one frame cycle as selected video signals when the step of determining whether or not the first video signal is a pull-down converted video signal and determining the kind of pull-down conversion when the first video signal is a pull-down converted video signal determines that the first video signal is a 2-3 pull-down converted video signal, emphasizing the selected video signal after the time series switches by one frame cycle in a time axis direction based on the selected video signal in the previous frame cycle, and converting the frame frequency of the first video signal into one 2K times the original one and outputting 5K selected video signals per output for each one frame cycle in the order of time series.

Further, the present invention is a video signal processing method comprising the steps of delaying each frame of a first video signal that is input by one frame period to output a second video signal, determining whether or not the first video signal is a pull-down converted video signal and determining the kind of pull-down conversion when the first video signal is a pull-down converted video signal, generating L-(L+1) pull-down sequence information (L is $2N+(N-1)/2$ and N is an odd number not less than 3) based on the motion vector when the step of determining whether or not the first video signal is a pull-down converted video signal and determining the kind of pull-down conversion when the first video signal is a pull-down converted video signal determines that the first video signal is a 2-3 pull-down converted video signal, selecting the first video signal or the second video signal and repeatedly outputting L then (L+1) video signals having the same time series per output for each one frame cycle as selected video signals when the step of determining whether or not the first video signal is a pull-down converted video signal and determining the kind of pull-down conversion when the first video signal is a pull-down converted video signal determines that the first video signal is a 2-3 pull-down converted video signal, emphasizing the selected video signal after the time series switches by one frame cycle in a time axis direction based on the selected video signal in the previous frame cycle, and converting the frame frequency of the first video signal into one N times the original one and repeatedly outputting L then (L+1) selected video signals per output for each one frame cycle in the order of time series.

**Effects of the Invention**

According to the present invention, when an input video signal is a signal of a movie film, it is possible to convert the frame rate into one equivalent to or higher than that of the input video signal as well as improving the motion judder, and it is also possible to similarly convert the frame rate into one higher than that of the input video signal when the input video signal is the standard television signal. Further, it is possible to achieve reduction in processing speed and reduction of a frame memory.

**Brief Description of the Drawings**

Fig. 1 is a block configuration diagram showing an example of a video signal processing device in a first embodiment;
Fig. 2 is a block diagram showing an example of a time axis emphasis circuit in a first to a third embodiment;
Figs. 3(A) and 3(B) are diagrams showing an example of a sequence chart when a video signal input to the video signal processing device in the first embodiment is 2-3 pull-down converted;
Figs. 4(A) and 4(B) are diagrams showing an example of a sequence chart when a video signal input to the video signal processing device in the first embodiment is 2-2 pull-down converted;
Figs. 5(A) and 5(B) are diagrams showing an example of a sequence chart when a video signal input to the video signal processing device in the first embodiment is the standard television signal;
Fig. 6 is a block configuration diagram showing an example of a video signal processing device in the second embodiment;
Figs. 7(A) and 7(B) are diagrams showing an example of a sequence chart when a video signal input to the video signal processing device in the second embodiment is 2-3 pull-down converted;
Fig. 8 is a block configuration diagram showing an example of a video signal processing device in the third embodiment; and
Figs. 9(A) and 9(B) are diagrams showing an example of a sequence chart when a video signal input to the video signal processing device in the third embodiment is 2-3 pull-down converted.

**Description of Embodiments**

<First embodiment>

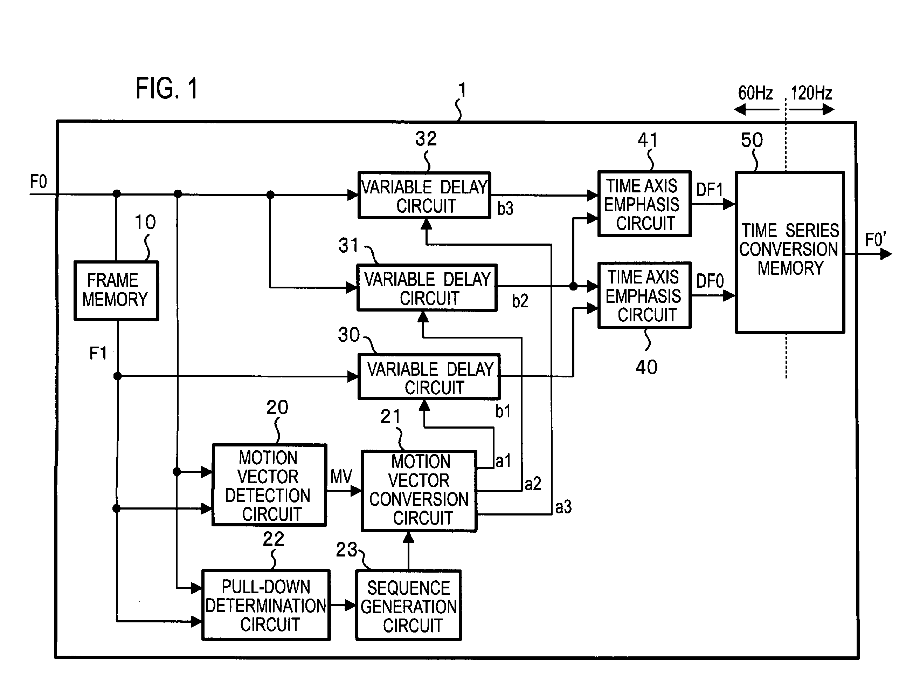

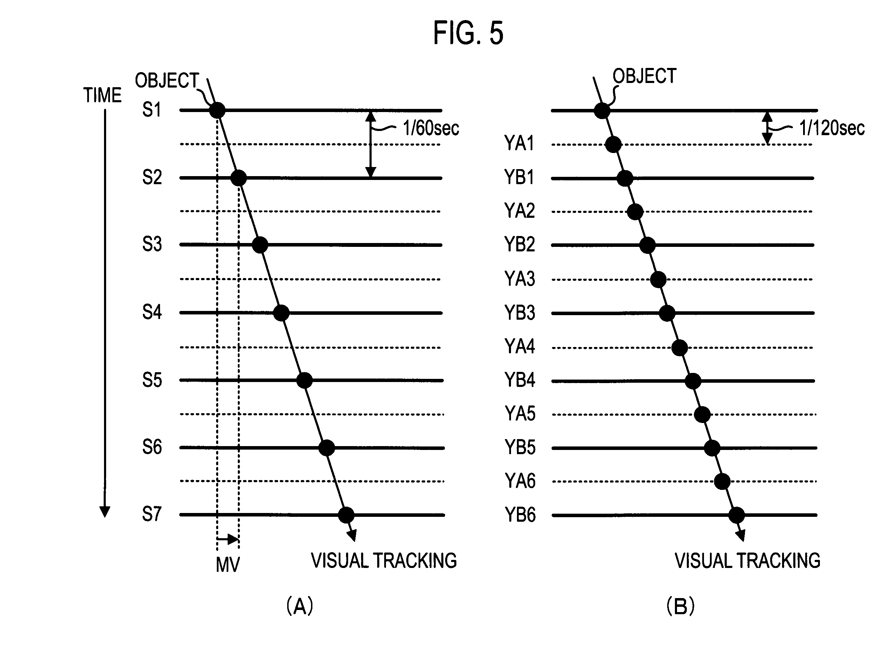

A video signal processing device and a video signal processing method in a first embodiment are explained below with reference to Fig. 1 to Figs. 5(A) and 5(B). Fig. 1 is an example of a block configuration diagram of the video signal processing device in the first embodiment. In Fig. 1, a video signal (first video signal) F0 input to a video signal processing device 1 is supplied to an image (frame) memory 10.

The image memory 10 stores the first video signal F0 corresponding to one frame and delays it by one frame period to output a second video signal F1. That is, the second video signal F1 is a video signal one frame ahead of the first video signal F0. The first video signal F0 and the second video signal F1 are supplied to each of a motion vector detection circuit 20 having a motion vector detecting unit and a pull-down determination circuit 22 having a pull-down determining unit.

The motion vector detection circuit 20 detects a motion vector MV between the frames of the supplied first video signal F0 and the second video signal F1. It is also possible to use, for example, a matching method etc. to detect a motion vector. The detected motion vector MV is supplied to a motion vector conversion circuit 21.

The pull-down detection circuit 22 determines whether or not the first video signal F0 is a pull-down converted video signal from the first video signal F0 that is input and the second video signal F1 and supplies the determination result to a sequence generation circuit 23. For example, it is possible to determine whether or not the first video signal F0 is a pull-down converted video signal by finding a difference between frames of the first video signal F0 and the second video signal F1. In this case, it is also possible to determine whether the first video signal F0 is a 2-2 pull-down converted video signal or a 2-3 pull-down converted video signal by detecting a cycle in which the difference between frames becomes large.

When the first video signal F0 includes pull-down converted information, it is also possible to determine whether or not the first video signal F0 is a pull-down converted video signal using the information. It may also be possible to determine whether or not the first video signal F0 is a pull-down converted video signal and the kinds of pull-down conversion using other publicly-known techniques.

The sequence generation circuit 23 having a sequence generating unit generates a sequence signal (pull-down sequence information) to execute a pull-down sequence based on the determination result supplied from the pull-down detection circuit 22 and supplies it to the motion vector conversion circuit 21. The pull-down sequence means to perform control determined in advance in the motion vector conversion circuit 21 etc. depending on the kind of pull-down conversion of the first video signal F0. The kinds of pull-down conversion include a case where pull-down conversion is not performed. The motion vector conversion circuit 21 generates three kinds of delay control signals a1 to a3 to control the delay amount in each of variable delay circuits 30 to 32, to be described later, based on the motion vector MV and the sequence signal. The delay control signals a1 to a3 are supplied to the respective variable delay circuits 30 to 32 having an image shifting unit.

The variable delay circuit 30 delays the second video signal F1 by a predetermined amount based on the delay control signal a1 to generate a motion-compensated video signal b1 the motion of which is compensated for and supplies the motion-compensated video signal b1 to a time axis emphasis circuit 40. The variable delay circuit 31 delays the first video signal F0 by a predetermined amount based on the delay control signal a2 to generate a motion-compensated video signal b2 the motion of which is compensated for and supplies it to the time axis emphasis circuit 40 and a time axis emphasis circuit 41. The variable delay circuit 32 delays the first video signal F0 by a predetermined amount based on the delay control signal a3 to generate a motion-compensated video signal b3 the motion of which is compensated for and supplies it to the time axis emphasis circuit 41.

The variable delay circuits 30 to 32 are circuits capable of variably delaying video signals based on the respective delay control signals a1 to a3. The image shifting unit is not limited to the variable delay circuit shown in Fig. 1. That is, it is only required for the image shifting unit to have a configuration in which a video signal to form a motion-compensated image is generated based on at least one of the first video signal F0 and the second video signal F1 and the motion vector MV and this also applies to the following explanation.

On the other hand, when an image is displayed on a liquid crystal panel, the response speed is low, and therefore, there is such a problem that image persistence occurs when a motion picture is displayed. In order to reduce the image persistence, it is necessary to emphasize a video signal near the video signal when the video signals are put side by side in the order of time series in a time axis direction.

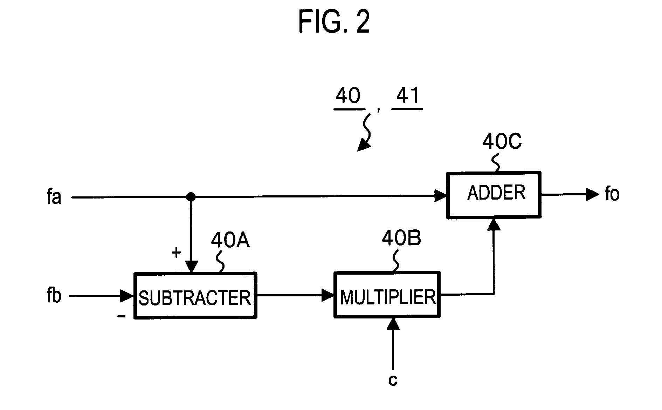

The time axis emphasis circuits 40, 41 each having a time axis emphasizing unit are filters that emphasize video signals in the time axis direction, and filters to prevent image persistence by raising the voltage of a desired video signal steeply. Fig. 2 is an example of a block configuration diagram of the time axis emphasis circuit. Two kinds of video signal that are input to the time axis emphasis circuits 40, 41 shown in Fig. 2 are denoted by fa, fb. A subtracter 40A subtracts fb from fa and the result is multiplied by a gain coefficient c using a multiplier 40B. Further, the video signal fa is added to the result using an adder 40C and a video signal fo is output. That is, the video signal fo output from the time axis emphasis circuit 40, 41 is obtained by

$$fo = fa + c(fa - fb) \qquad \cdots (1)$$

Here, the gain coefficient c is intended to determine the degree of emphasis of the video signal fa and set in accordance with the response characteristic of the liquid crystal. For example, when the response speed of the liquid crystal material is comparatively high and the image persistence when a motion picture is displayed is slight, the gain coefficient c is set small and when the response speed is comparatively low and the image persistence when a motion picture is displayed is remarkable, the gain coefficient c is set large.

In the time axis emphasis circuit 40, the video signal fa is the motion-compensated video signal b2 and the video signal fb is the motion-compensated video signal b1. In the time axis emphasis circuit 41, the video signal fa is the motion-compensated video signal b3 and the video signal fb is the motion-compensated video signal b2. Then, the time axis emphasis circuit 40 emphasizes the motion-compensated video signal b2 in the time axis direction based on the motion-compensated video signal b1 to generate an emphasized video signal DF0 and supplies it to a time series conversion memory 50. The time axis emphasis circuit 41 emphasizes the motion-compensated video signal b3 in the time axis direction based on the motion-compensated video signal b2 to generate an emphasized video signal DF1 and supplies it to the time series conversion memory 50.

The time axis emphasis circuits 40, 41 are not limited to the configuration shown in Fig. 2. For example, it may also be possible for the time axis emphasis circuits 40, 41 to emphasize a video signal in the time axis direction using a plurality of video signals including the previous video signal of the video signal to be emphasized when the video signals are put side by side in the order of time series. Further, it may also be possible to use one or a plurality of video signals near to the video signal in the time series not including the previous video signal of the video signal to be emphasized.

The time series conversion memory 50 temporarily stores the video signals DF0 and DF1 that are supplied and outputs the video signals DF0 and DF1 in this order as a video signal F0' to a liquid crystal panel, not shown schematically. Further, the time series conversion memory 50 doubles the frame frequency to output the video signal F0'.

Next, the case is explained, where the video signal F0, which is a 2-3 pull-down converted video signal recorded by 24 frames/second, such as a movie film, is input to the image signal processing device 1. The 2-3 pull down conversion is conversion in which an odd-numbered frame is converted into two fields and an even-numbered frame into three fields. On the other hand, the 3-2 pull-down conversion, converse to the above, is conversion in which an odd-numbered frame is converted into three fields and an even-numbered frame into two fields. In the following explanation, it is assumed that the 2-3 pull-down conversion includes the 3-2 pull-down conversion. When the pull-down determination circuit 22 determines that the first video signal F0 is a 2-3 pull-down converted signal, the sequence generation circuit 23 generates a sequence signal to execute 2-3 pull-down sequence information and transmits it to the motion vector conversion circuit 21.

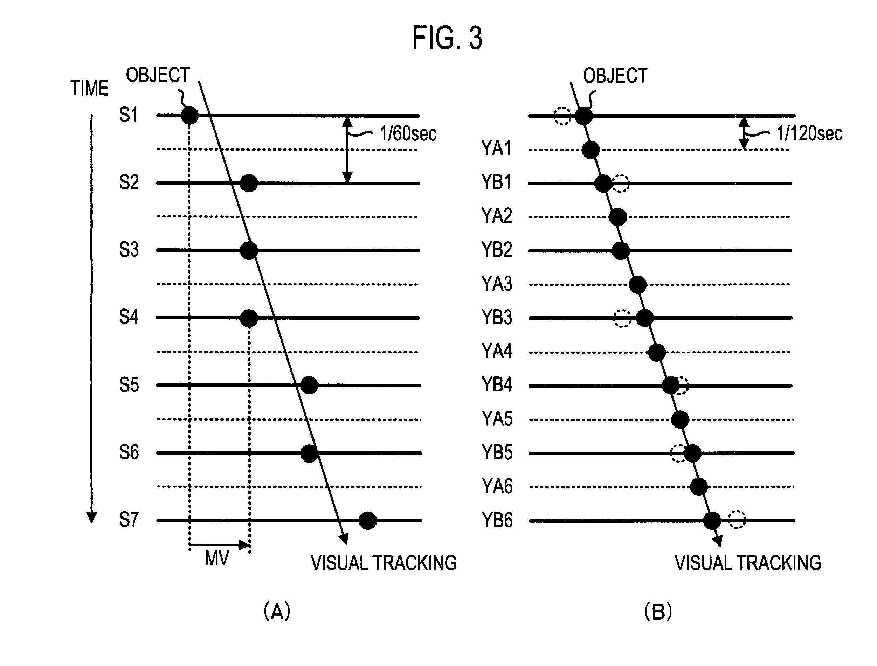

Figs. 3(A) and 3(B) are diagrams showing an example of a sequence chart when the first video signal F0 input to the video signal processing device 1 is 2-3 pull-down converted. Fig. 3(A) shows an image pattern to be input to the video signal processing device 1. As shown in Fig. 3(A), the first video signal F0 is input to the video signal processing device 1 for each 1/60 sec in the order of time series of frames S1, S2, S3 ···. In Figs. 3(A) and 3(B), black circles denote the positions of an object and broken circles denote the positions of the original object of the video signal input to the video signal processing device 1. In the following sequence chart also, the same symbols as those in Figs. 3(A) and 3(B) are used.

Frames S2, S3 and S4 are the same image pattern and frames S5, S6 are the same image pattern, and the same image pattern is input to the three successive frames, then the same image pattern is input to the two successive frames and this is repeated.

The motion vector detection circuit 20 detects a motion vector amount when frame S1 changes to S2 as the MV. When the first video signal F0 that is input is not subjected to any processing in the video signal processing device 1, there is produced a shift between the direction of visual tracking and the moving object as shown in Fig. 3(A). Because of this, a viewer views the image as an unnatural image in which motion is not smooth.

The motion vector conversion circuit 21 supplies the delay control signals a1 to a3 to the respective variable delay circuits 30 to 32 to control the delay amount so as to be as shown, for example, in Table 1 based on the motion vector amount MV supplied from the motion vector detection circuit 20 and the sequence signal. In Table 1, the delay amount is the same in a 5/60 second cycle and it is assumed that the delay amount is the same when the first video signal F0 (frame input currently) is S2 and S7. The delay amount shown in Table 1 represents a relative delay amount. Further, it is not possible to realize processing to delay in the negative direction in the variable delay circuit 30, and therefore, it is assumed that the delay amount in each delay circuit, to be explained in the following, is a relative one.

[Table 1]

| First video signal F0 | S2 | S3 | S4 | S5 | S6 | S7 | ... |
|---|---|---|---|---|---|---|---|
| Second video signal F1 | S1 | S2 | S3 | S4 | S5 | S6 | ... |
| Delay amount of variable delay circuit 32 | $-2\cdot MV/5$ | 0 | $+2\cdot MV/5$ | $-MV/5$ | $+MV/5$ | $-2\cdot MV/5$ | ... |
| Delay amount of variable delay circuit 31 | $-3\cdot MV/5$ | $-MV/5$ | $+MV/5$ | $-2\cdot MV/5$ | 0 | $-3\cdot MV/5$ | ... |
| Delay amount of variable delay circuit 30 | $+MV/5$ | $-2\cdot MV/5$ | 0 | $+2\cdot M/5$ | $-MV/5$ | $+MV/5$ | ... |

The variable delay circuits 31, 32 delay the first video signal F0 based on the delay control signals a2, a3 supplied from the motion vector conversion circuit 21. For example, the variable delay circuit 32 delays the first video signal F0 by a delay amount of $-2\cdot MV/5$ to generate the motion-compensated video signal b3 when the first video signal F0 that is supplied is frame S2. The variable delay circuit 31 delays the first video signal F0 by a delay amount of $-3\cdot MV/5$ to generate the motion-compensated video signal b2 when the first video signal F0 that is supplied is frame S2.

Fig. 3(B) shows the motion-compensated video signals b2, b3 output respectively from the variable delay circuits 31, 32 arranged in the order of time series of YA1, YB1, YA2, Yob2 ··· for each 1/120 sec. As shown in Fig. 3 (B), frames are newly interpolated by the video signal processing device 1 and the motion is compensated for. Consequently, the direction of visual tracking agrees with the moving object and the motion judder is improved and a viewer views the image as an image in which motion is smooth.

The variable delay circuit 30 delays the second video signal F1, which is the previous video signal, based on the delay control signal b1 supplied from the motion vector conversion circuit 21. For example, the variable delay circuit 30 delays the second video signal F1 by a delay amount of $+MV/5$ to generate the motion-compensated video signal b1 when the second video signal F1 that is supplied is frame S1.

The delay processing for the second video signal F1 in the variable delay circuit 30 is the same as the processing for the first video signal F0 in the previous frame of the variable delay circuit 32. Consequently, it may also be possible to generate the motion-compensated video signal b3 by delaying the output of the video signal of the variable delay circuit 32, instead of the variable delay circuit 30, by an amount corresponding to one frame. In such a case, a memory is necessary for the delay corresponding to one frame.

Next, the case is explained, where the first video signal F0, which is a 2-2 pull-down converted motion picture of 30 frames/sec, is input to the video signal processing device 1. When the pull-down determination circuit 22 determines that the first video signal F0 is a 2-2 pull-down converted signal, the sequence generation circuit 23 generates a sequence signal to execute the 2-2 pull-down sequence and transmits it to the motion vector conversion circuit 21.

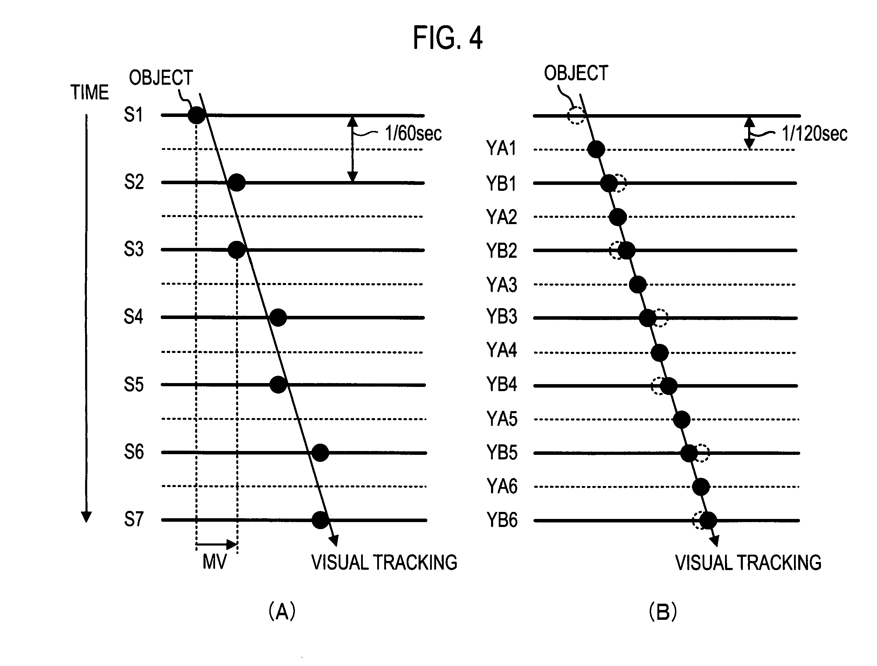

Figs. 4(A) and 4(B) are diagrams showing an example of a sequence chart when the first video signal F0 input to the video signal processing device 1 is 2-2 pull-down converted. Fig. 4(A) shows an image pattern input to the video signal processing device 1. As shown in Fig. 4(A), the first video signal F0 is input to the video signal processing device 1 in the order of time series of frames S1, S2, S3 ⋯ for each 1/60 sec. Frames S2, S3 are the same image pattern and frames S4, S5 are the same image pattern, and the same pattern is input to the video signal processing device 1 in the two successive frames and this is repeated.

The motion vector detection circuit 20 detects the motion vector amount when S1 changes to S2 as the MV as in the case of the 2-3 pull-down. When the first video signal F0 that is input is not subjected to any processing in the video signal processing device 1, there is produced a shift between the direction of visual tracking and the moving object as shown in Fig. 4(A). Because of this, a viewer views the image as an unnatural image in which motion is not smooth.

The motion vector conversion circuit 21 supplies the delay control signals a1 to a3 to the respective variable delay circuits 30 to 32 to control the delay amount so as to be as shown, for example, in Table 2 based on the motion vector amount MV supplied from the motion vector detection circuit 20 and the sequence signal. The delay amount shown in Table 2 is the same in a 2/60 second cycle and it is assumed that the delay amount is the same when the frames of the first video signal F0 are S2 and S4.

[Table 2]

| First video signal F0 | S2 | S3 | S4 | S5 | S6 | ... |
|---|---|---|---|---|---|---|
| Second video signal F 1 | S1 | S2 | S3 | S4 | S5 | ... |
| Delay amount of variable delay circuit 32 | -MV/4 | +MV/4 | -MV/4 | +MV/4 | -MV/4 | ... |
| Delay amount of variable delay circuit 31 | -MV/2 | 0 | -MV/2 | 0 | -MV/2 | ... |
| Delay amount of variable delay circuit 30 | +MV/4 | -MV/4 | +MV/4 | -MV/4 | +MV/4 | ... |

The variable delay circuits 31, 32 delay the first video signal F0 based on the delay control signals a2, a3 supplied from the motion vector conversion circuit 21. For example, the variable delay circuit 32 delays the first video signal F0 by a delay amount of -MV/4 to generate the motion-compensated video signal b3 when the first video signal F0 that is supplied is frame S2. The variable delay circuit 31 delays the first video signal F0 by a delay amount of -MV/2 to generate the motion-compensated video signal b2 when the first video signal F0 that is supplied is frame S2.

Fig. 4(B) shows the motion-compensated video signals b2, b3 output from the variable delay circuits 31, 32 arranged in the order of time series of YA1, YB1, YA2, YB2 ⋯ for each 1/120 sec. As shown in Fig. 4(B), frames are newly interpolated by the video signal processing device 1 and the motion is compensated for. Consequently, the direction of visual tracking agrees with the moving object and the motion judder is improved and a viewer views the image as an image in which motion is smooth.

The variable delay circuit 30 delays the second video signal F1 based on the delay control signal b1 supplied from the motion vector conversion circuit 21. For example, the variable delay circuit 30 delays the second video signal F1 by a delay amount of +MV/4 to generate the motion-compensated video signal b1 when the second video signal F1 that is supplied is frame S1.

Next, the case is explained, where the video signal F0 having a vertical frequency of 60 Hz, which is the vertical frequency of a standard television, is input to the video signal processing device 1. When the pull-down determination circuit 22 determines that the first video signal F0 is not a pull-down converted signal, the sequence generation circuit 23 generates a sequence signal to perform control when pull-down conversion is not performed and transmits it to the motion vector conversion circuit 21.

Figs. 5(A) and 5(B) are diagrams showing an example of a sequence chart when the first video signal F0 input to the video signal processing device 1 is a video signal of a standard television having a vertical frequency of 60 Hz. Fig. 5(A) shows an image pattern input to the video signal processing device 1. As shown in Fig. 5 (A), the first video signal F0 is input to the video signal processing device 1 in the order of time series of S1, S2, S3 ⋯.

The motion vector detection circuit 20 detects the motion vector amount when S1 changes to S2 as the MV. The motion vector conversion circuit 21 supplies the delay control signals a1 to a3 to the respective variable delay circuits 30 to 32 to control the delay amount so as to be as shown, for example, in Table 3 based on the motion vector amount MV supplied from the motion vector detection circuit 20 and the sequence signal. The delay amount shown in Table 3 is the same at all times regardless of the frame.

[Table 3]

| First video signal F0 | S2 | S3 | S4 | S5 | S6 | ... |
|---|---|---|---|---|---|---|
| Second video signal F1 | S1 | S2 | S3 | S4 | S5 | ... |
| Delay amount of variable delay circuit 32 | 0 | 0 | 0 | 0 | 0 | ... |
| Delay amount of variable delay circuit 31 | -MV/2 | -MV/2 | -MV/2 | -MV/2 | -MV/2 | ... |
| Delay amount of variable delay circuit 30 | 0 | 0 | 0 | 0 | 0 | ... |

The variable delay circuit 32 sets the delay amount to zero by the delay control signal a3 supplied from the motion vector conversion circuit 21, and therefore, does not delay the first video signal F0 and uses it as the motion-compensated video signal b3 as it is. The variable delay circuit 31 delays the first video signal F0 by a delay amount of -MV/2 to generate the motion-compensated video signal b2 based on the delay control signal a2 supplied from the motion vector conversion circuit 21.

Fig. 5(B) shows the motion-compensated video signals b2, b3 output from the variable delay circuits 31, 32 arranged in the order of time series of YA1, YB1, YA2, YB2 ··· for each 1/120 sec. As shown in Fig. 5(B), frames are newly interpolated by the video signal processing device 1 and the motion is compensated for. Consequently, the direction of visual tracking agrees with the moving object and the motion judder is improved and a viewer views the image as an image in which motion is smooth.

As explained above, according to the first embodiment, it is possible to compensate for the motion by varying the delay amount in the variable delay circuits 30 to 32 depending on whether or not a video signal is pull-down converted, and therefore, a high frame rate can be realized. Because of this, it is possible to provide a smooth image regardless of whether or not the video signal is pull-down converted.

Further, in the first embodiment, two emphasized video signals based on two motion-compensated video signals are converted so as to have a frame rate twice that of the first video signal F0, which is an input video signal, using the three variable delay circuits (image shifting units) that generate three motion-compensated video signals, however, this is not limited. For example, when the frame rate of an input video signal is converted into a frame rate N (N is a natural number not less than 2) times the original one, an image shifting unit (variable delay circuit) for generating a plurality, that is, N or more, of motion-compensated video signals is necessary. Then, it is only required to select N motion-compensated video signals from among the plurality of motion-compensated video signals to generate N emphasized video signals emphasized in the time axis direction.

Furthermore, the delay amounts included in the delay control signals a1 to a3 to be supplied to the variable delay circuits 30 to 32 may be those other than the delay amounts shown in Table 1 to Table 3. Such a configuration may be accepted, in which to the variable delay circuits 30 to 32, one of or both the first video signal F0 and the second video signal F1 delayed by an amount corresponding to one frame are supplied and thus the motion-compensated video signals b1 to b3 are generated. Further, as shown in Fig. 1, it is possible to design a configuration in which the motion compensation and the emphasis of the time axis are performed before time series conversion is performed, and therefore, a high-speed frame memory is not necessary. Because of this, the configuration of the video signal processing device 1 is such one in which reduction in processing speed and reduction of the frame memory can be achieved.

<Second embodiment>

A second embodiment differs from the first embodiment in that when the first video signal F0 is determined to be a pull-down converted signal, the time series conversion memory outputs a plurality of video signals based on the same motion-compensated video signal. In the second embodiment, points that differ from those in the first embodiment are explained.

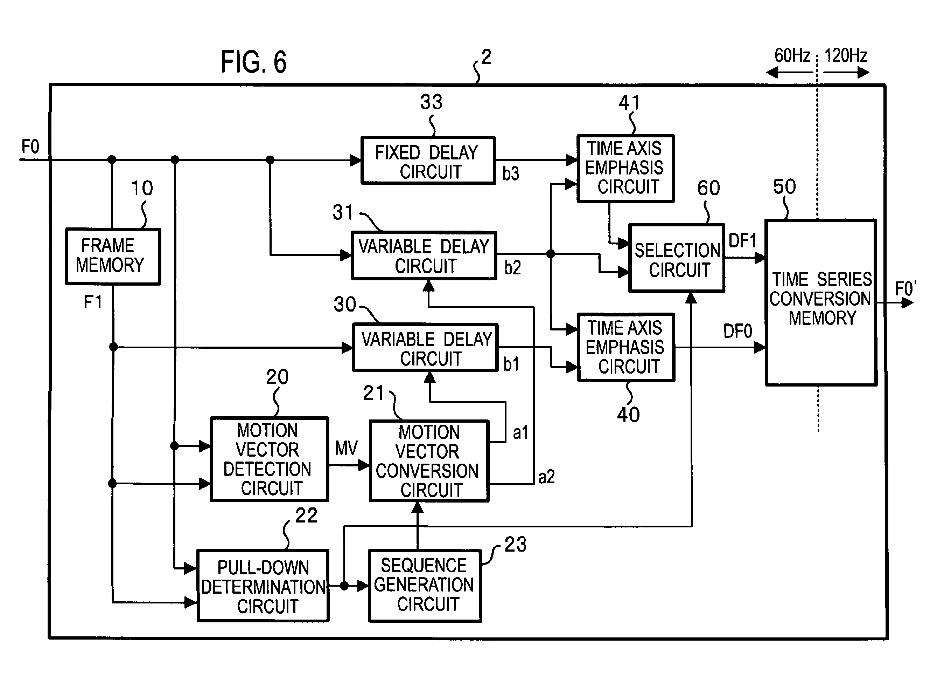

Fig. 6 is a block configuration diagram showing an example of a video signal processing device in the second embodiment. In a video signal processing device 2 in Fig. 6, the same symbol is attached to the same configuration block as that in Fig. 1. A fixed delay circuit 33 delays (image shifts) the first video signal F0 by a delay amount fixed in advance regardless of whether or not the first video signal F0 is a pull-down converted video signal.

A selection circuit 60 selects the motion-compensated video signal b2 delayed by a predetermined delay amount in the variable delay circuit 31 when the pull-down determination circuit 22 determines that the first video signal F0 is a pull-down converted signal. On the other hand, the selection circuit 60 selects a video signal generated in the time axis emphasis circuit 41 when the pull-down determination circuit 22 determines that the first video signal F0 is not a pull-down converted signal.

The case is explained, where the pull-down detection circuit 22 determines that the first video signal F0 is a 2-3 pull-down converted video signal. The motion vector detection circuit 20 detects the motion vector amount when frame S 1 changes to S2 as the MV. When the pull-down determination circuit 22 determines that the first video signal F0 is a pull-down converted signal, the sequence generation circuit 23 generates a sequence signal to execute a pull-down sequence for a pull-down converted signal and transmits it to the motion vector conversion circuit 21.

The motion vector conversion circuit 21 supplies the delay control signals a1, a2 to the variable delay circuits 30, 31 to control the delay amount so as to be shown as, for example, in Table 4 based on the motion vector amount MV supplied from the motion vector detection circuit 20 and the sequence signal. The delay amount shown in Table 4 is the same in a 5/60 second cycle and it is assumed that the delay amount is the same when the frames of the first video signal F0 are S2 and S7.

[Table 4]

| First video signal F0 | S2 | S3 | S4 | S5 | S6 | S7 | ... |
|---|---|---|---|---|---|---|---|
| Second video signal F1 | S1 | S2 | S3 | S4 | S5 | S6 | ... |
| Delay amount of variable delay circuit 31 | $-2 \cdot V/5$ | 0 | $+2 \cdot MV/5$ | $-MV/5$ | $+MV/5$ | $-2 \cdot MV/5$ | ... |
| Delay amount of variable delay circuit 30 | $+MV/5$ | $-2 \cdot MV/5$ | 0 | $+2 \cdot MV/5$ | $-MV/5$ | $+MV/5$ | ... |

The variable delay circuit 31 delays the first video signal F0 based on the delay control signal a2 supplied from the motion vector conversion circuit 21. For example, the variable delay circuit 31 delays the first video signal F0 by a delay amount of $-2 \cdot MV/5$ to generate the motion-compensated video signal b2 when the first video signal F0 that is supplied is frame S2.

The variable delay circuit 30 delays the second video signal F1 in the previous frame by a predetermined delay amount supplied from the motion vector conversion circuit 21. For example, the variable delay circuit 30 delays the second video signal F1 by a delay amount of $+MV/5$ when the second video signal F1 that is input is frame S1.

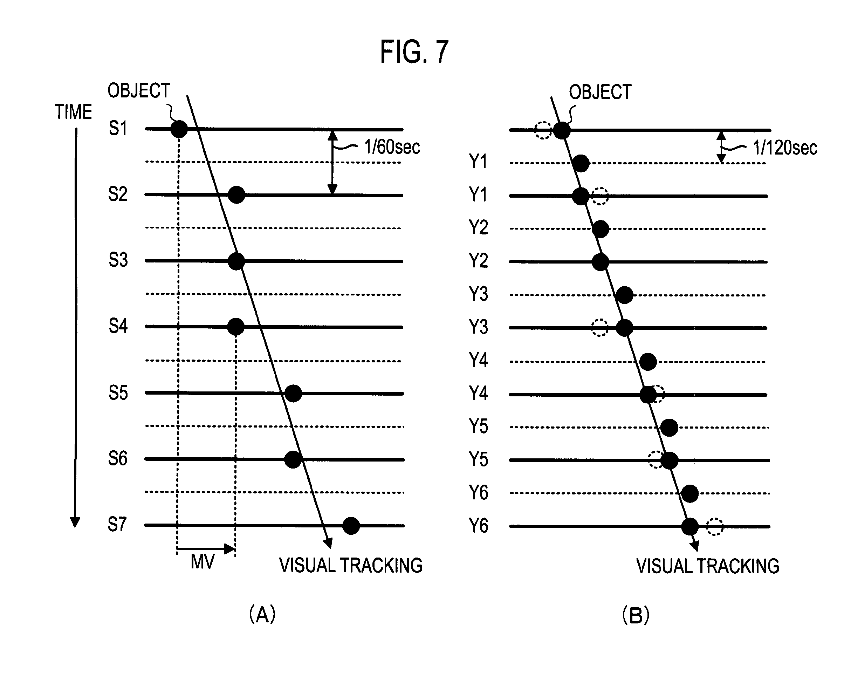

Figs. 7(A) and 7(B) are diagrams showing an example of a sequence chart when the first video signal F0 input to the video signal processing device 2 is 2-3 pull-down converted. Fig. 7(A) shows an image pattern to be input to the video signal processing device 1. As shown in Fig. 7(A), frames S2, S3 and S4 are the same image pattern, frames S5, S6 are the same image pattern, and the same image pattern is input in the three successive frames and then the same image pattern is input in the two successive frames and this is repeated.

Fig. 7(B) shows the motion-compensated video signal b2 output from the variable delay circuit 30 in the order of time series of Y1, Y1, Y2, Y2 ··· for each 1/120 sec. In the second embodiment, when the first video signal F0 is a pull-down converted video signal, the time series conversion memory 50 temporarily stores the motion-compensated video signal b2 as the video signal DF0 emphasized in the time axis emphasis circuit 40 and the motion-compensated video signal b2 selected in the selection circuit 60 as the video signal DF1.

The time series conversion memory 50 doubles the frame frequency to output the video signals DF0, DF1 in this order as the video signal F0' to a liquid crystal panel, not shown schematically. Consequently, as shown in Fig. 7 (B), the first video signal F0 shown in Fig. 7(A) will be a video signal based on the same motion-compensated video signal b2 in two frames for each 1/60 second cycle. Then, frames are interpolated by the video signal processing device 2 and the motion is compensated for moderately. Consequently, the direction of visual tracking approximately agrees with the moving object and the motion judder is improved and a viewer views the image as an image in which motion is smooth to a certain degree.

There is a case where it is preferable not to improve too much the motion judder or blurring of a motion picture depending on its content when the video signal is a pull-down converted still image of a movie film. That is, when the video signal processing device 1 in the first embodiment is used, there may be a case where an image causes a feeling of discomfort because its motion judder is improved too much. In such a case, it is recommended to output a video signal based on the same motion-compensated video signal b2 in two frames each to compensate for the motion moderately using the selection circuit 60 explained in the second embodiment. It is also possible to prevent the effect of correcting the blurring of a motion picture from becoming strong because the time axis emphasis circuit 41 is not used in a pull-down converted video signal.

Next, the case is explained, where a video signal having a vertical frequency of 60 Hz, which is the standard television signal, is input to the video signal processing device 2. When the pull-down detection circuit 22 determines that the first video signal F0 is not a pull-down converted signal, the selection circuit 60 selects the video signal as the video signal DF1, which is the motion-compensated video signal b3 supplied from the fixed delay circuit 33 and emphasized in the time axis direction by the time axis emphasis circuit 41.

In this case, the time series conversion memory 50 temporarily stores the video signal DF1 emphasized in the time axis direction by the time axis emphasis circuit 41 and the video signal DF0 emphasized in the time axis direction by the time axis emphasis circuit 40. The time series conversion memory 50 doubles the frame frequency to output the video signals DF0, DF1 in this order as the video signal F0 to a liquid crystal panel, not shown schematically. The delay amounts delayed by the variable delay circuits 30, 31 are the same as those in Table 3 in the first embodiment. Consequently, as in Figs. 5(A) and 5(B) in the first embodiment, frames are interpolated newly by the video signal processing device 2 as shown in Fig. 5(B) and a viewer views the image as an image in which motion is smooth.

As explained above, according to the second embodiment, when the first video signal F0, which is an input video signal, is a pull-down converted video signal, it is possible to convert the frame rate into a higher one than that of the input video signal, however, the motion is compensated for more moderately than in the first embodiment. When the first video signal F0 is the standard television video signal, it is possible to compensate for the motion as in the first embodiment and realize a high frame rate.

Further, the time axis emphasis circuits 40, 41 emphasize the motion-compensated video signals b2, b3, respectively, in the time axis direction using only the previous motion-compensated video signal in the time series, however, it is not limited to the previous motion-compensated video signal. It is also possible to emphasize them in the time axis direction using a plurality of motion-compensated video signals.

Furthermore, in the second embodiment, in the case of a pull-down converted input video signal, one motion-compensated video signal and one emphasized video signal based on the motion-compensated video signal are converted so as to have a frame rate twice that of the first video signal F0, which is an input video signal, using two variable delay circuits (image shifting units) that generate two motion-compensated video signals, however, this is not limited.

For example, when the frame rate of an input video signal is converted into a frame rate N (N is a natural number not less than 2) times the original one, the video signal processing device 2 requires an image shifting unit (variable delay circuit) that generates a plurality of motion-compensated video signals. Then, the video signal processing device 2 selects M (M is a natural number and a factor of N) motion-compensated video signals from among the plurality of motion-compensated video signals and the emphasized video signals, which are the respective motion-compensated video signals emphasized in the time axis direction. Further, for each of the M selected video signals (motion-compensated video signals or emphasized video signals) having the same time series, the combination of the motion-compensated video signal and the emphasized video signal having the same time series based on the motion-compensated video signal is output N/M (M is a natural number and a factor of N) times per output. Consequently, the video signal processing device 2 is a device that generates N video signals in total by outputting each video signal having the same time series N/M times per output and converts the frame rate into a frame rate N times the original one. It is recommended to reduce image persistence by outputting at least one or more emphasized video signals together for each of the M selected signals.

In the second embodiment, explanation is given when N=2, M=1, however, M=1 when N=3 and the video signal based on the same motion-compensated video signal corresponding to three frames is output in 1/60 sec. The relationship is such that M=1 or 2 when N=4, M=1 when N=5, and M=1, 2, or 3 when N=6. As a result, two or more frames of the video signals based on the same motion-compensated video signal are output in the same number per output and thus the motion judder is improved.

Further, the delay amounts included in the delay control signals a1 to a3 to be supplied to the variable delay circuits 30, 31 may be those other than the delay amounts shown in Table 4. Such a configuration may also be accepted in which one of or both the first video signal F0 and the second video signal F1 delayed by an amount corresponding to one frame are supplied to the variable delay circuits 30, 31 and thus the motion-compensated video signals b1 to b3 are generated. Furthermore, as shown in Fig. 6, it is possible to design a configuration in which motion compensation and time axis emphasis are performed before time series conversion is performed, and therefore, a high-speed frame memory is not necessary. Hence, the configuration of the video signal processing device 2 is such one in which reduction in processing speed and reduction of the frame memory can be achieved.

<Third embodiment>

A third embodiment differs from the first and second embodiments in that the video signal processing device generates a sequence signal to execute a 5-5 pull-down sequence so that a plurality of, that is, five video signals based on the same motion-compensated video signal are output per output when the first video signal F0 is determined to be a 2-3 pull-down converted signal. In the third embodiment, points different from the first and second embodiments are explained.

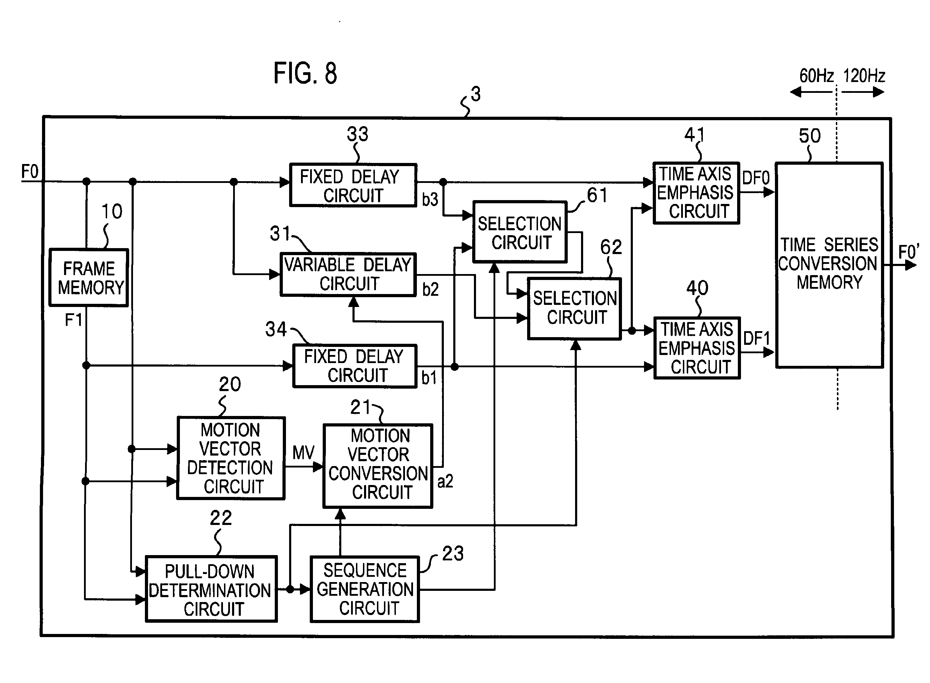

Fig. 8 is a block configuration diagram showing an example of the video signal processing device in the third embodiment. In a video signal processing device 3 in Fig. 8, the same symbol is attached to the same configuration block as that in Fig. 1 and Fig. 6. A fixed delay circuit 34 delays the second video signal F1 by a delay amount fixed in advance regardless of whether or not the first video signal F0 is a pull-down converted video signal.

A selection circuit 61 having a selecting unit selects either the motion-compensated video signal b3 delayed by a predetermined delay amount in the fixed delay circuit 33 or the motion-compensated video signal b1 delayed by a predetermined delay amount in the fixed delay circuit 34 based on the sequence signal to execute a pull-down sequence generated in the sequence generation circuit 23 when the pull-down determination circuit 22 determines that the first video signal F0 is a pull-down converted signal.

A selection circuit 62 selects the motion-compensated video signal selected in the selection circuit 61 as a selected video signal when the pull-down determination circuit 22 determines that the first video signal F0 is a pull-down converted signal. On the other hand, the selection circuit 61 selects the motion-compensated video signal b2 supplied from the variable delay circuit 31 as a selected video signal when the pull-down determination circuit 22 determines that the first video signal F0 is not a pull-down converted signal.

The case is explained, where the pull-down determination circuit 22 determines that the first video signal F0 is a 2-3 pull-down converted video signal. The sequence generation circuit 23 generates a sequence signal to execute a 5-5 pull-down sequence. The selection circuit 61 selects the motion-compensated video signal b1 or b3 as a selected video signal based on the sequence signal. The time series conversion memory 50 outputs the video signal F0' based on the same motion-compensated video signal for five frames per output. That is, the video signal F0' is switched in a 5/120 second cycle.

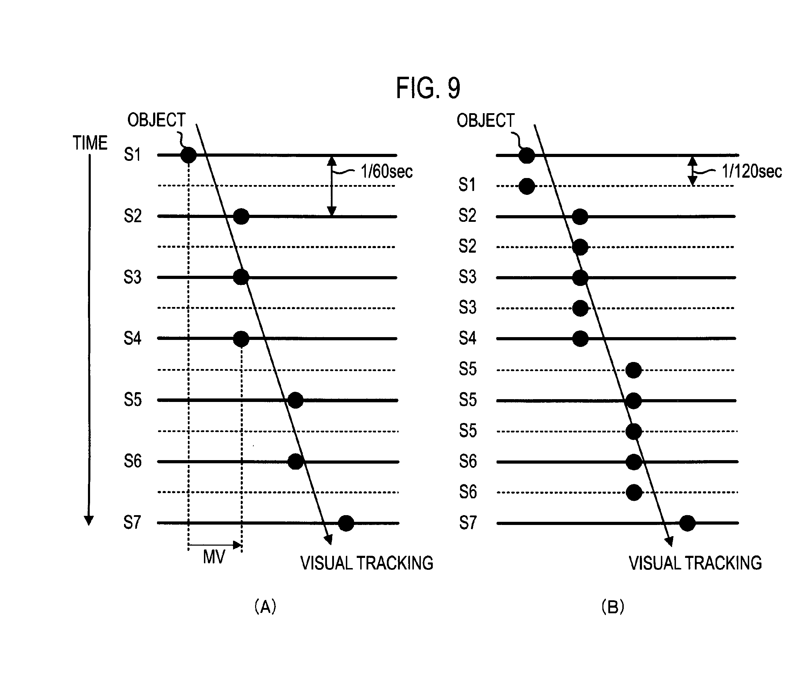

Figs. 9(A) and 9(B) are diagrams showing an example of a sequence chart when the first video signal F0 input to the video signal processing device 3 is 2-3 pull-down converted. Fig. 9(A) shows an image pattern to be input to the video signal processing device 1. Frames S2, S3 and S4 are the same image pattern and frames S5, S6 are the same image pattern, and the same image pattern is input to the three successive frames then the same image pattern is input to the two successive frames and this is repeated.

Fig. 9(B) shows the motion-compensated video signal b1 or b3 output from the fixed delay circuits 33, 34 arranged in the order of time series of S1, S2, S2, S3, S3, S4, S5, S5, S5, S6 ⋯ for each 1/120 sec. In the third embodiment, when the first video signal F0 is a pull-down converted signal, if the same motion-compensated video signal b1 or b3 is supplied to each of the time axis emphasis circuits 40, 41 as a selected video signal, the effect of the emphasis of the selected video signal in the time axis direction as shown in the formula (1) cannot be obtained. However, it is possible to emphasize the motion-compensated video signal b1 or b3 in the time axis direction between the motion-compensated video signals b1 or b3 before and after the video signal F0' is switched in a 5/120 second cycle (five frames each). Then, it is desirable for the video signal processing device 3 to emphasize the motion-compensated video signal b1 or b3 in the time axis direction to reduce image persistence each time the video signal F0' is switched by one frame cycle.

The time series conversion memory 50 temporarily stores the selected video signal including the motion-compensated video signal b1 or b3 having passed through the time axis emphasis circuit 40 as DF0 and the selected video signal including the motion-compensated video signal b1 or b3 having passed through the time axis emphasis circuit 41 as DF1. Then, the time series conversion memory 50 doubles the frame frequency to output the video signals DF0, DF1 in this order as the video signal F0' to a liquid crystal panel, not shown schematically. As shown in Fig. 9(B), the first video signal F0 shown in Fig. 9(A) will become a video signal based on the same motion-compensated video signal in five frames each in each 5/120 second cycle.

When the first video signal F0 is a 2-2 pull-down converted signal, the motion-compensated video signal b1 or b3 selected by the selection circuit 61 is used as a selected video signal so that the time series conversion memory 50 outputs the video signal F0' based on the same motion-compensated video signal in four frames per output. When the first video signal F0 is the standard television signal, the motion-compensated video signal delayed in the variable delay circuit 31 is selected by the selection circuits 61 and 62 and the processing is the same as that in the first embodiment.

As explained above, according to the third embodiment, when the first video signal F0, which is an input video signal, is a 2-3 pull-down converted video signal, the motion is not compensated for by the video signal processing device 3. However, the first video signal F0 in which two frames and three frames are repeated becomes the video signal F0' in which five frames are repeated at all times, and therefore, the motion judder is improved somewhat and a viewer views the image as an image that suppresses a feeling of discomfort to a certain degree.

There is a case where it is preferable not to compensate for the motion depending on its content when a video signal is a pull-down converted still image of a movie film. That is, in the second embodiment also, if the motion is compensated for too much and a feeling of discomfort is caused, it is recommended not to compensate for the motion of a pull-down converted video signal as explained in the third embodiment.

Further, in the second embodiment, in the case of a 2-3 pull-down converted input video signal, the configuration is shown in which five video signals based on the same selected video signal including the video signal emphasized in the time axis direction are output per output using the selection circuit and the frame rate is doubled, however, the configuration is not limited to this.

For example, using two variable delay circuits (image shifting units) that generate two motion-compensated video signals, one motion-compensated video signal and one emphasized video signal based on the motion-compensated video signal are converted so as to have a frame rate twice that of the first video signal F0, which is an input video signal, however, this is not limited.

For example, when the first video signal F0 that is 2-3 pull-down converted is input to the video signal processing device 3 that converts the frame rate of an input video signal into N (N is an even number not less than 2) times the original one, the sequence generation circuit 23 is only required to output a sequence signal to execute a 5K-5K (K is N/2) pull-down sequence. The 5K-5K pull-down sequence means to control so as to output 5K video signals per output based on the motion-compensated video signal having the same time series.

In the video signal processing device 3 in the third embodiment, explanation is given on the assumption that N=2, K=1, however, K=2 when N=4 and a 10-10 pull-down sequence is executed. Consequently, 10 video signals based on the same selected video signal are output in 5/120 sec. After that, 10 video signals based on the same selected video signal one frame cycle apart are output in 5/120 sec. As a result, 10 video signals each, 20 in total, based on the two kinds of selected video signal are output in 5/60 sec. Similarly, K=3 when N=6 and a 15-15 pull-down sequence is executed. Consequently, the video signal processing device 3 outputs 5K frames of the video signal based on the same selected video signal per output and thus the motion judder is improved somewhat.

When the first video signal F0 that is 2-3 pull-down converted is input to the video signal processing device 3 that converts the frame rate of an input video signal into N (N is an odd number not less than 3) times the original one, the sequence generation circuit 23 is only required to generate an L-(L+1) pull-down sequence. The L-(L+1) pull-down sequence means to control so that L video signals having the same time series are output and then (L+1) video signals having the same time series are output, and afterward, L video signals and (L+1) video signals are output repeatedly. Here, L is 2N+(N-1)/2. Further, like the 2-3 pull-down sequence, the L-(L+1) pull-down sequence includes an (L+1)-L pull-down sequence.

For example, L=7 when N=3 and a 7-8 pull-down sequence is executed. Consequently, seven video signals (selected video signals or emphasized video signals) having the same time series are output in 7/180 sec. After that, eight video signals (selected video signals or emphasized video signals) having the same time series one frame cycle apart are output in 8/180 sec. As a result, seven and eight video signals of two kinds having different time series are output in 5/60 sec. Similarly, L=9 when N=5 and a 12-13 pull-down sequence is executed. Consequently, the video signal processing device 3 outputs L frames of the video signal having the same time series then (L+1) video signals having the same time series repeatedly per output for any L and thus the motion judder is improved somewhat even when N is an odd number not less than 3.

It is desirable for a viewer to be able to select two or more embodiments of the first to third embodiments according to the viewer's preference. In such a case, only one circuit common to the first to third embodiments is required.

**Industrial Applicability**

According to the present invention, when an input video signal is a signal of a movie film, it is possible to convert the frame rate into one equivalent to or higher than that of the input video signal as well as improving the motion judder, and it is also possible to similarly convert the frame rate into one higher than that of the input video signal when the input video signal is the standard television signal. Further, it is possible to achieve reduction in processing speed and reduction of a frame memory.

**Explanations of letters or numerals**

| | |
|---|---|
| 1, 2, 3: | video signal processing device |
| 10: | frame memory |
| 20: | motion vector detection circuit |
| 22: | pull-down determination circuit |
| 23: | sequence generation circuit |
| 30-32: | variable delay circuit |
| 33, 34: | fixed delay circuit |
| 40, 41: | time axis emphasis circuit |
| 50: | time series conversion memory |
| 60-62: | selection circuit |

**Claims**

1. A video signal processing device comprising:

a frame memory delaying each frame of a first video signal that is input by one frame period to output a second video signal;

a motion vector detecting unit configured to detect a motion vector between the frames of the first video signal and the second video signal;

a pull-down determining unit configured to determine whether or not the first video signal is a pull-down converted video signal;

a sequence generating unit configured to generate pull-down sequence information based on the determination result of the pull-down determining unit;

an image shifting unit configured to compensate for the motion of at least one of the first and second video signals based on the pull-down sequence information and the motion vector to generate a plurality of motion-compensated video signals;

a time axis emphasizing unit configured to emphasize N (N is a natural number not less than 2) motion-compensated video signals among the plurality of motion-compensated video signals, respectively, in a time axis direction based on at least one or more of the motion-compensated video signals including the neighboring motion-compensated video signals in the order of time series to output N emphasized video signals; and

a time series conversion memory converting the frame frequencies of the N emphasized video signals into those N times the original ones and outputting them in the order of time series.

2. The video signal processing device according to claim 1, wherein
the determining unit determines, when determining that the first video signal is a pull-down converted video signal, whether the first video signal is a 2-2 pull-down converted signal or a 2-3 pull-down converted signal, and wherein the sequence generating unit generates different kinds of pull-down sequence information depending on whether the first video signal is a 2-2 pull-down converted signal or a 2-3 pull-down converted signal.

3. A video signal processing device comprising:

a frame memory delaying each frame of a first video signal that is input by one frame period to output a second video signal;

a motion vector detecting unit configured to detect a motion vector between the frames of the first video signal and the second video signal;

a pull-down determining unit configured to determine whether or not the first video signal is a pull-down converted video signal;

a sequence generating unit configured to generate pull-down sequence information based on the determination result of the pull-down determining unit;

an image shifting unit configured to compensate for the motion of at least one of the first and second video signals based on the pull-down sequence information when the pull-down determining unit determines that the first video signal is a pull-down converted video signal and the motion vector to generate a plurality of motion-compensated video signals;

a time axis emphasizing unit configured to emphasize M motion-compensated video signals among the plurality of motion-compensated video signals, respectively, in a time axis direction based on at least one or more of the motion-compensated video signals including the neighboring motion-compensated video signals in the order of time series to output M (M is a natural number) emphasized video signals when the pull-down determining unit determines that the first video signal is a pull-down converted video signal; and

a time series conversion memory converting the frame frequencies of the motion-compensated video signal and the emphasized video signal into those N times the original ones and outputting them in the order of time series as well as repeatedly outputting the combination of the motion-compensated video signal and the emphasized video signal based on the motion-compensated video signal N/M times (N is a natural number multiple of M) per output for the M motion-compensated video signals, respectively, when the pull-down determining unit determines that the first video signal is a pull-down converted video signal.

4. A video signal processing device comprising:

a frame memory delaying each frame of a first video signal that is input by one frame period to output a second video signal;

a pull-down determining unit configured to determine whether or not the first video signal is a pull-down converted video signal and to determine the kind of pull-down conversion when the first video signal is a pull-down converted video signal;

a sequence generating unit configured to generate 5K-5K pull-down sequence information (K is a natural number) when the pull-down determining unit determines that the first video signal is a 2-3 pull-down converted video signal;

a selecting unit configured to select the first video signal or the second video signal and to output 5K video signals having the same time series per output for each one frame cycle as selected video signals when the pull-down determining unit determines that the first video signal is a 2-3 pull-down converted video signal;

a time axis emphasizing unit configured to emphasize the selected video signal after the time series switches by one frame cycle in the time axis direction based on the selected video signal in a previous frame cycle; and

a time series conversion memory converting the frame frequency of the first video signal into one 2K times the original one and outputting 5K selected video signals per output for each one frame cycle in the order of time series.

5. A video signal processing device comprising:

a frame memory delaying each frame of a first video signal that is input by one frame period to output a second video signal;

a pull-down determining unit configured to determine whether or not the first video signal is a pull-down converted video signal and to determine the kind of pull-down conversion when the first video signal is a pull-down converted video signal;

a sequence generating unit configured to generate L-(L+1) pull-down sequence information (L is 2N+(N-1)/2 and N is an odd number not less than 3) when the pull-down determining unit determines that the first video signal is a 2-3 pull-down converted video signal;

a selecting unit configured to select the first video signal or the second video signal and to repeatedly output L and then (L+1) video signals having the same time series per output for each one frame cycle as selected video signals when the pull-down determining unit determines that the first video signal is a 2-3 pull-down converted video signal;

a time axis emphasizing unit configured to emphasize the selected video signal after the time series switches by one frame cycle in the time axis direction based on the selected video signal in the previous frame cycle; and

a time series conversion memory converting the frame frequency of the first video signal into one N times the original one and repeatedly outputting L then (L+1) selected video signals per output for each one frame cycle in the order of time series.

6. A video signal processing method comprising the steps of:

delaying each frame of a first video signal that is input by one frame period to output a second video signal;

detecting a motion vector between the frames of the first video signal and the second video signal;

determining whether or not the first video signal is a pull-down converted video signal;

generating pull-down sequence information based on the results of determining whether or not the first video signal is a pull-down converted video signal and of determining the kind of pull-down conversion;

compensating for the motion of at least one of the first and second video signals based on the pull-down sequence information and the motion vector to generate a plurality of motion-compensated video signals;

emphasizing N (N is a natural number not less than 2) motion-compensated video signals among the plurality of motion-compensated video signals, respectively, in a time axis direction based on at least one or more of the motion-compensated video signals including the neighboring motion-compensated video signals in the order of time series to output N emphasized video signals; and

converting the frame frequencies of the N emphasized video signals into those N times the original ones and outputting them in the order of time series.

7. The video signal processing method according to claim 6, wherein
the step of determining whether or not the first video signal is a pull-down converted video signal includes determining whether the first video signal is a 2-2 pull-down converted signal or a 2-3 pull-down converted signal when determining that the first video signal is a pull-down converted video signal, and wherein
the step of generating the pull-down sequence information includes generating different kinds of pull-down sequence information depending on whether the first video signal is a 2-2 pull-down converted signal or a 2-3 pull-down converted signal.

**8.** A video signal processing method comprising the steps of:

delaying each frame of a first video signal that is input by one frame period to output a second video signal;
detecting a motion vector between the frames of the first video signal and the second video signal;
determining whether or not the first video signal is a pull-down converted video signal;
generating pull-down sequence information based on the determination result in the step of determining whether or not the first video signal is a pull-down converted video signal;
compensating for the motion of at least one of the first and second video signals based on the pull-down sequence information when the first video signal is determined to be a pull-down converted video signal and the motion vector to generate a plurality of motion-compensated video signals;
emphasizing M (M is a natural number) motion-compensated video signals among the plurality of motion-compensated video signals, respectively, in a time axis direction based on at least one or more of the motion-compensated video signals including the neighboring motion-compensated video signals in the order of time series to output M emphasized video signals when the step of determining whether or not the first video signal is a pull-down converted video signal determines that the first video signal is a pull-down converted video signal; and
converting the frame frequencies of the motion-compensated video signal and the emphasized video signal into those N times the original ones and outputting them in the order of time series as well as repeatedly outputting the combination of the motion-compensated video signal and the emphasized video signal based on the motion-compensated video signal N/M times (N is a natural number multiple of M) per output for the M motion-compensated video signals, respectively, when the step of determining whether or not the first video signal is a pull-down converted video signal determines that the first video signal is a pull-down converted video signal.

**9.** A video signal processing method comprising the steps of:

delaying each frame of a first video signal that is input by one frame period to output a second video signal;
determining whether or not the first video signal is a pull-down converted video signal and determining the kind of pull-down conversion when the first video signal is a pull-down converted video signal;
generating 5K-5K pull-down sequence information (K is a natural number) based on the motion vector when the step of determining whether or not the first video signal is a pull-down converted video signal and determining the kind of pull-down conversion when the first video signal is a pull-down converted video signal determines that the first video signal is a 2-3 pull-down converted video signal;
selecting the first video signal or the second video signal and outputting 5K video signals having the same time series per output for each one frame cycle as selected video signals when the step of determining whether or not the first video signal is a pull-down converted video signal and determining the kind of pull-down conversion when the first video signal is a pull-down converted video signal determines that the first video signal is a 2-3 pull-down converted video signal;
emphasizing the selected video signal after the time series switches by one frame cycle in a time axis direction based on the selected video signal in the previous frame cycle; and
converting the frame frequency of the first video signal into one 2K times the original one and outputting 5K selected video signals per output for each one frame cycle in the order of time series.

**10.** A video signal processing method comprising the steps of:

delaying each frame of a first video signal that is input by one frame period to output a second video signal;
determining whether or not the first video signal is a pull-down converted video signal and determining the kind of pull-down conversion when the first video signal is a pull-down converted video signal;
generating L-(L+1) pull-down sequence information (L is 2N+(N-1)/2 and N is an odd number not less than 3) based on the motion vector when the step of determining whether or not the first video signal is a pull-down converted video signal and determining the kind of pull-down conversion when the first video signal is a pull-down converted video signal determines that the first video signal is a 2-3 pull-down converted video signal;
selecting the first video signal or the second video signal and repeatedly outputting L then (L+1) video signals having the same time series per output for each one frame cycle as selected video signals when the step of determining whether or not the first video signal is a pull-down converted video signal and determining the kind of pull-down conversion when the first video signal is a pull-down converted video signal determines that the first video signal is a 2-3 pull-down converted video signal;
emphasizing the selected video signal after the time series switches by one frame cycle in a time axis direction based on the selected video signal in the previous frame cycle; and

converting the frame frequency of the first video signal into one N times the original one and repeatedly outputting L then (L+1) selected video signals per output for each one frame cycle in the order of time series.

## FIG. 1

FIG. 1

# FIG. 2

# FIG. 3

# FIG. 4

TIME

OBJECT

S1

1/60sec

S2

S3

S4

S5

S6

S7

MV

VISUAL TRACKING

(A)

OBJECT

YA1
YB1
YA2
YB2
YA3
YB3
YA4
YB4
YA5
YB5
YA6
YB6

1/120sec

VISUAL TRACKING

(B)

EP 2 320 649 A1

# FIG. 5

TIME

OBJECT

S1 ——————————●——————————  ↕ 1/60sec
........................●........................
S2 ——————————●——————————
........................●........................
S3 ——————————●——————————
........................●........................
S4 ——————————●——————————
........................●........................
S5 ——————————●——————————
........................●........................
S6 ——————————●——————————
........................●........................
S7 ——————————●——————————

MV

VISUAL TRACKING

(A)

OBJECT

——————————●——————————  ↕ 1/120sec
YA1 .................●.................
YB1 ——————————●——————————
YA2 .................●.................
YB2 ——————————●——————————
YA3 .................●.................
YB3 ——————————●——————————
YA4 .................●.................
YB4 ——————————●——————————
YA5 .................●.................
YB5 ——————————●——————————
YA6 .................●.................
YB6 ——————————●——————————

VISUAL TRACKING

(B)

EP 2 320 649 A1

22

FIG. 6

# FIG. 7

TIME

OBJECT

S1

1/60sec

S2

S3

S4

S5

S6

S7

MV

VISUAL TRACKING

(A)

OBJECT

Y1

Y1

Y2

Y2

Y3

Y3

Y4

Y4

Y5

Y5

Y6

Y6

1/120sec

VISUAL TRACKING

(B)

EP 2 320 649 A1

FIG. 8

# FIG. 9

(A)

(B)

EP 2 320 649 A1

<div align="center">**INTERNATIONAL SEARCH REPORT**</div>

| | International application No. |
|---|---|
| | PCT/JP2009/062859 |

**A. CLASSIFICATION OF SUBJECT MATTER**
H04N7/01(2006.01)i

According to International Patent Classification (IPC) or to both national classification and IPC

**B. FIELDS SEARCHED**

Minimum documentation searched (classification system followed by classification symbols)
H04N7/01

Documentation searched other than minimum documentation to the extent that such documents are included in the fields searched
Jitsuyo Shinan Koho          1922–1996   Jitsuyo Shinan Toroku Koho   1996–2009
Kokai Jitsuyo Shinan Koho    1971–2009   Toroku Jitsuyo Shinan Koho   1994–2009

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2006-337448 A  (Victor Company Of Japan, Ltd.),<br>14 December 2006 (14.12.2006),<br>paragraphs [0011] to [0039]; fig. 1, 5<br>& US 2006/0267904 A1 | 1-3,6-8<br>4,5,9,10 |
| Y<br>A | JP 2003-189257 A  (Sony Corp.),<br>04 July 2003 (04.07.2003),<br>entire text; all drawings<br>& US 2003/0107672 A1     & EP 1303136 A2 | 1-3,6-8<br>4,5,9,10 |
| Y<br>A | JP 2005-148521 A  (Victor Company Of Japan, Ltd.),<br>09 June 2005 (09.06.2005),<br>entire text; all drawings<br>& US 2005/0078069 A1     & US 2008/0238847 A1 | 1-3,6-8<br>4,5,9,10 |

[X] Further documents are listed in the continuation of Box C.          [ ] See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>08 October, 2009 (08.10.09) | Date of mailing of the international search report<br>20 October, 2009 (20.10.09) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

| International application No. |
|---|
| PCT/JP2009/062859 |

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | JP 2006-91412 A (Victor Company Of Japan, Ltd.),<br>06 April 2006 (06.04.2006),<br>entire text; all drawings<br>(Family: none) | 1-3,6-8<br>4,5,9,10 |
| Y<br>A | JP 9-172618 A (Nippon Hoso Kyokai),<br>30 June 1997 (30.06.1997),<br>paragraphs [0017], [0018]; fig. 4<br>(Family: none) | 1-3,6-8<br>4,5,9,10 |
| Y<br>A | JP 10-501953 A (Philips Electronics N.V.),<br>17 February 1998 (17.02.1998),<br>fig. 2<br>& US 5929919 A          & EP 765572 A<br>& WO 1996/033571 A2 | 1-3,6-8<br>4,5,9,10 |
| Y<br>A | JP 2006-285092 A (Canon Inc.),<br>19 October 2006 (19.10.2006),<br>paragraph [0044]; fig. 18<br>& US 2006/0221069 A1 | 3,8<br>4,5,9,10 |

Form PCT/ISA/210 (continuation of second sheet) (April 2007)

**EP 2 320 649 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006337448 A